# FASCICULE DE BREVET EUROPEEN

(11) **EP 1 481 128 B1**
(45) Date de publication et mention de la délivrance du brevet: **04.05.2005**
(21) Numéro de dépôt: 03725261.6
(22) Date de dépôt: 05.03.2003
(51) Int. Cl.: D21H 17/13, D21H 13/40

(54) **MAT DE FILS COUPES PAR VOIE HUMIDE**
AUS GESCHNITTENEN FASERN NASSHERGESTELLTES VLIES
WET PROCESS CHOPPED FIBER MAT PRODUCTION

(30) Priorité: 06.03.2002 FR 0202833
(43) Date de publication de la demande: 01.12.2004
(73) Titulaire: Saint-Gobain Vetrotex France S.A., 73000 Chambéry (FR)
(72) Inventeur: DROUX, Michel, F-73490 La Ravoire (FR)
(74) Mandataire: Colombier, Christian
(86) Numéro de dépôt international: PCT/FR2003/000701
(87) Numéro de publication internationale: WO 2003/074785

(56) Documents cités:
- WO-A-01/75204
- GB-A- 730 054
- US-A- 4 626 289
- US-A1- 2001 009 834
- US-B1- 6 291 552

## Description

L'invention concerne un procédé de fabrication d'un mat de fils coupés par voie humide. De tels mats sont habituellement fabriqués par voie sèche à l'aide de procédés peu productifs (faibles vitesse et débit machine) menant par ailleurs à des mats de bas grammage et au grammage peu régulier.

Dans le mat selon l'invention, on cherche à ce que les filaments individuels se trouvent assemblés le plus possible sous la forme de fils. On cherche donc à minimiser le taux de filaments individuels.

Le US 6291552 a proposé un procédé par voie humide dans lequel les fils coupés sont d'abord défilamentarisés, les filaments obtenus étant ensuite réagglomérés à l'aidé d'agents floculants contenus dans l'eau de procédé (« white water » en anglais). Ce procédé nécessite donc une formulation particulière de l'eau de procédé et de plus la réagglomération n'est pas régulière.

Le WO 0175204 propose un procédé de préparation de voile (« tissue mat » en anglais) par voie humide dans lequel les fibres sont ensimées par une résine époxy ou un PVOH, l'ensimage n'étant pas séché entre son application sur les fibres et l'utilisation desdites fibres dans le procédé de fabrication du voile. Ce procédé mène à un textile aux propriétés faiblement renforçantes, notamment pour les résines polyesters. De plus, une faible proportion des fils coupés reste sous la forme de fils coupés dans l'eau de procédé, la plus grande partie se défilamentarisant au cours du procédé. Enfin, ce procédé par voie humide ne fonctionne pas avec un taux de fibres dans l'eau de procédé supérieur à 0,05% en poids.

Comme documents de l'état de la technique, on peut encore citer WO 98/11299, US4118272, US4242404, US4112174, WO99/45198, US6054022.

L'invention résout les problèmes sus-mentionnés. Le procédé selon l'invention comprend :
- une étape de mise en dispersion dans une eau de procédé (« white water » en anglais) de fils coupés et séchés après ensimage par un liquide d'ensimage comprenant un organosilane et un agent collant (« film former » en anglais), puis,
- une étape de formation d'une nappe par passage de la dispersion sur une toile de formation à travers laquelle l'eau de procédé est drainée, les fils étant retenus sur ladite toile, puis,
- une étape d'application d'un liant, puis,
- une étape de traitement thermique.

Les fils coupés séchés utilisés dans le cadre du procédé selon l'invention subissent donc les étapes de fabrication suivantes :
- une étape d'ensimage de fils à l'aide d'un liquide comprenant un organosilane et un agent collant, puis,
- une étape de séchage des fils ensimés, puis,
- une étape de coupe des fils ensimés séchés.

L'organosilane comprend de préférence au moins une double liaison carbone-carbone.

L'organosilane utilisé lors de l'ensimage est généralement le dérivé hydrolysé d'un alkoxysilane, lui-même comprenant généralement le groupement trialcoxysilane, c'est-à-dire -Si(OR)₃ , R représentant un radical hydrocarboné tel qu'un radical méthyle ou éthyle ou propyle ou butyle. L'organosilane peut donc être le dérivé hydrolysé de l'un des composés suivants :
- alkoxysilane methacrylique,
- 3-méthacryloxypropyltriméthoxysilane,
- alkoxysilane vinylique,
- vinyltriéthoxysilane,
- tris(2-methoxyethoxy)vinylsilane,
- arylaminoalkoxysilane,
- alkoxyaminosilane,
- 3-aminopropyltriethoxysilane,
- N-(2-aminoéthyl)-3-aminopropyltriméthoxysilane,
- 2-(3,4-epoxycycloheoyl)éthyltriméthoxysilane,
- 3-glycidoxypropyltriméthoxysilane
- epoxyalkoxysilane,
- triacétoxyvinylalkoxysilanesilane,

L'organosilane est généralement présent dans le liquide d'ensimage à raison de 0,05% à 1% en poids et de préférence de 0,2 à 0,6% en poids.

L'agent collant (« film former » en anglais) peut être choisi dans la liste suivante :
- homopolyvinylacétate,
- copolymère vinylacétate-silane,
- copolymère polyvinylacétate-époxyde,
- copolymère polyvinylacétate-N-méthylolacrylamide,
- époxypolyester,
- polyester,
- polyuréthane,
- polymère époxy,
- copolymère époxy-polyuréthane,
- copolymère de l'acétate de vinyle et de l'éthylène,
- copolymère du styrène et d'au moins un acrylate,

On peut également utiliser l'un des agents collants cités dans « K. Loewenstein, The Manufacturing technology of continuous glass fibers, Glass science and technology 6, Elsevier, 1983 ».

L'agent collant a de préférence une masse moléculaire comprise entre 10000 et 100000. De préférence, après séchage à 105°C pendant deux heures, l'agent collant a une solubilité dans l'acétone à 20°C allant de 50 à 95%.

L'agent collant est généralement présent dans le liquide d'ensimage à raison de 2 à 10 % et de préférence 3 à 6 % en poids. Si l'agent collant est un polyvinylacétate, le liquide d'ensimage comprend également de préférence un plastifiant tel que le dibutylphtalate ou le dibenzoate de diethylène glycol.

Le liquide d'ensimage comprend également de préférence un lubrifiant, lequel peut par exemple être choisi dans la liste suivante :
- sel d'ammonium quaternaire à chaîne grasse,
- alkyléther,
- huile minérale.

Le lubrifiant peut être présent dans le liquide d'ensimage à raison de 0,05 à 1% et de préférence 0,2 à 0,6% en poids. Si l'on utilise un sel d'ammonium quaternaire à chaîne grasse comme lubrifiant, ce composé joue également un rôle en tant qu'agent antistatique.

Le liquide d'ensimage peut également comprendre un agent antistatique, lequel peut être un sel d'ammonium quaternaire à chaîne grasse. L'agent antistatique peut être présent dans le liquide d'ensimage à raison de 0 à 1%.

Après ensimage on enroule généralement les fils en bobine pour former des gâteaux, lesquels peuvent être stockés à l'état humide. Le fil humide peut ensuite être débobiné pour être séché puis coupé.

Après ensimage, Il est également possible de faire sécher les fils en continu, puis de les enrouler pour former un gâteau sec, lequel peut également être stocké. Le fil séché peut ensuite être débobiné pour être coupé.

On peut également réaliser la succession des étapes d'ensimage, séchage et coupe, en continu sans stockage intermédiaire.

Pour l'étape de séchage des fils ensimés, on chauffe les fils de façon à ce qu'il comprennent moins de 0,2% en poids d'eau, et de préférence moins de 0,1 % en poids d'eau. Ce traitement thermique est généralement réalisé entre 90 et 140°C. Si les fils ensimés ont été mis sous la forme de gâteaux humide, on peut réaliser ce traitement thermique en portant les gâteaux humides de fils ensimés dans une enceinte portée à 130°C, généralement pour une durée d'au moins 10 heures, par exemple de 12 à 24 heures. Le taux résiduel d'eau sur les fils peut se mesurer par gravimétrie en mesurant la perte de poids à 105°C de 10 grammes d'un fil ensimé.

Après séchage, les fils sont coupés, généralement à une longueur allant de 20 mm à 110 mm, de préférence de 25 à 60 mm, par toute machine de coupe appropriée.

Les fils ensimés coupés et séchés, au moment de leur mise en dispersion dans l'eau de procédé, contiennent généralement au moins 99% en poids de verre.

Les fils coupés sont ensuite mis en dispersion dans l'eau, par exemple dans un pulpeur. La solution aqueuse dans laquelle les fils coupés sont dispersés est appelée eau de procédé.

Pour le passage de la dispersion sur la toile de formation, les fils coupés peuvent être présents dispersés dans l'eau de procédé à raison de 0,06% à 1% en poids, par exemple 0,1 % à 1% en poids de la somme du poids des fils et de l'eau de procédé.

Les fils coupés peuvent être d'abord mis en dispersion dans l'eau de procédé à raison de 0,5 à 10% en poids dans le pulpeur, pour ensuite subir une dilution, par exemple de 10 fois. Cependant, il est également possible de réaliser une concentration en fils coupés de 0,05% à 1% en poids dès le pulpeur et ne procéder à aucune dilution avant envoie de la dispersion sur la toile de formation.

L'eau de procédé peut comprendre un épaississant pour faire augmenter la viscosité de l'eau de procédé. Cet épaississant peut être présent à raison de 0 à 0,5% en poids dans l'eau de procédé. Cet épaississant peut par exemple être une hydroxyéthylcellulose.

On introduit de préférence l'épaississant en quantité telle que l'eau de procédé présente à 20°C une viscosité comprise entre 1 et 20 mPa.s et de préférence comprise entre 5 et 12 mPa.s.

L'eau de procédé peut comprendre un dispersant cationique. Ce dispersant cationique peut être présent à raison de 0 à 0,1% en poids dans l'eau de procédé. Ce dispersant cationique peut être par exemple la guanidine ou une amine à chaîne grasse. On peut notamment utiliser l'aerosol C 61 commercialisé par CYTEC.

La dispersion eau de procédé/fils coupés est agitée, puis envoyée sur une toile de formation perméable laissant s'écouler l'eau de procédé à travers elle et retenant les fils coupés à sa surface. L'eau de procédé peut être aspirée pour améliorer son évacuation. L'eau de procédé peut être recyclée pour être de nouveau mélangée avec des fils coupés. Les fils coupés forment ainsi une nappe en surface de la toile de formation. De la mise en dispersion des fibres au passage sur la toile de formation, il n'est pas nécessaire de chauffer le mélange eau de procédé / fibre qui a donc toujours sensiblement la température ambiante, c'est-à-dire une température allant de 10°C à 50°C et même 18°C à 30°C. Ainsi, la dispersion fils coupés / eau de procédé est généralement en permanence à une température allant de 10°C à 50°C, voire 18°C à 30°C.

Après passage sur la toile de formation, on réalise l'étape d'application du liant, lequel est généralement à l'état de dispersion aqueuse. Ce liant peut être appliqué par trempage entre deux toiles de formation auquel cas le produit maintenu entre les deux toiles est plongé dans un bain par l'intermédiare de paires de rouleaux, ou déposé sur la nappe de fils coupés par une cascade, ce qui signifie que la dispersion aqueuse est coulée sur la nappe de fils coupés selon un filet perpendiculaire à ladite nappe et perpendiculaire au sens de défilement de ladite nappe. Le liant est du type de ceux habituellement utilisé dans ce genre de réalisation. Notamment il peut s'agir d'acétate de polyvinyle (PVAc) plastifié ou styrène acrylique ou acrylique auto-réticulable. L'excès de liant peut être évacué par aspiration à travers la toile de formation. Le liant est appliqué en quantité telle qu'après l'étape de traitement thermique, son taux dans le mat final est compris entre 2 et 20% en poids, et de préférence entre 3 et 6 % en poids.

L'étape de traitement thermique à pour but d'évaporer l'eau ainsi que réaliser les éventuelles réactions chimiques entre les différents constituants comme par exemple les condensations de groupements -OH. Le traitement thermique peut être réalisé par chauffage entre 140 et 250°C. La durée du traitement thermique va généralement de 2 secondes à 3 minutes.

Les fils utilisables dans le cadre de la présente invention comprennent généralement du verre et sont plus particulièrement des fils de verre. On entend par « fil » un ensemble de filaments contigus et comprenant plus particulièrement de 10 à 300 filaments.

Les fils coupés peuvent être stockés avant leur mise en dispersion dans l'eau de procédé.

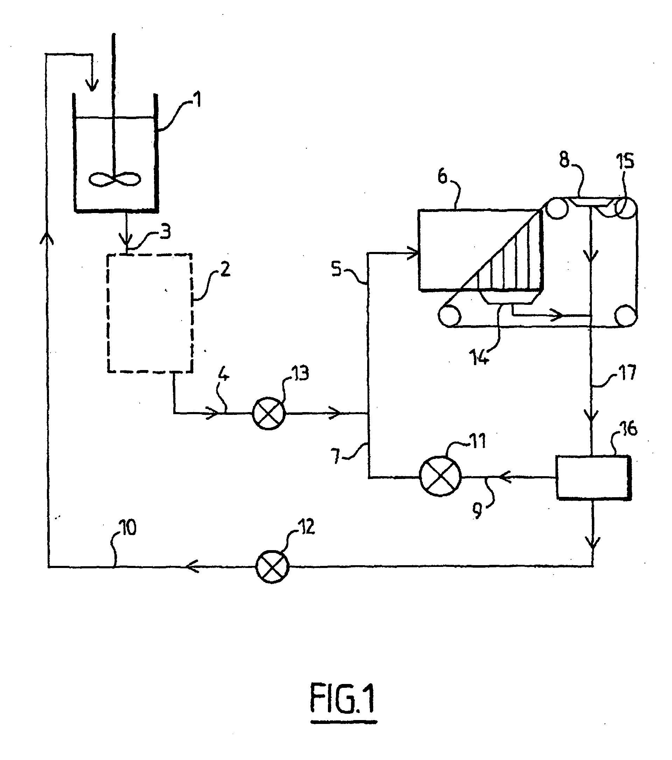

La figure 1 représente schématiquement un procédé de préparation en continu d'un mat, après la préparation des fils coupés. Les fils coupés sont introduits dans un pulpeur 1 en présence d'eau de procédé et sous agitation, à raison de 0,5 à 10 % en poids et plus généralement de 1 à 5 % en poids de fils coupés dans le mélange fils/eau de procédé. Le mélange se déverse ensuite éventuellement dans un bac de stockage 2 à travers la canalisation 3, la fonction du bac de stockage étant d'augmenter la durée de mélange entre les fils et l'eau de procédé. Ce bac de stockage est facultatif. Le mélange est ensuite amené à travers la canalisation 4 à la canalisation 5, laquelle rassemble le flux de mélange provenant de la canalisation 4 à un flux d'eau de procédé recyclé et provenant de la caisse de tête 6 à travers la canalisation 7. A ce niveau, la teneur en fils de verre dans le mélange fils/eau de procédé est fortement abaissée, par exemple de 10 fois environ. De l'eau de procédé est drainée en 14 et éventuellement aspirée en 15 à travers la toile de formation 8 et est recyclée par l'intermédiaire de la canalisation 17. Cette eau recyclée est ensuite partagée en 16, par exemple pour environ 10% pour retourner vers le pulpeur à travers la canalisation 10 et pour environ 90% pour retourner vers la caisse de tête 6 à travers les canalisations 9, 7 puis 5. La circulation dans les canalisations est assurée par les pompes 11, 12 et 13. La pompe 11 est appelée pompe principale (« fan pump » en anglais). Les étapes suivantes, plus traditionnelles d'application du liant et de traitement thermique ne sont pas représentées sur la figure 1. Le mat peut être séché et traité thermiquement en étuve à air chaud à circulation au travers du tapis.

L'invention permet la fabrication industrielle d'un mat à fils coupés à la masse surfacique régulière et généralement comprise entre 50 et 1100 g/m², notamment environ 225 ou 300 ou 375 ou 450 ou 600 ou 900 g/m². L'invention permet l'obtention de mats très homogènes notamment lorsqu'ils sont de faible grammage, c'est-à-dire comprise entre 70 et 150 g/m². Le mat fabriqué selon le procédé de l'invention, est très homogène, ce qui signifie que sa masse surfacique peut varier de moins de 20% sur sa surface, par exemple moins de 10%, voire même moins de 5%. Dans le mat selon l'invention, au moins 80%, voire 90% en poids des filaments était sous la forme de fil (ensemble de filaments contigus) comprenant au moins 10 filaments et même au moins 25 filaments.

Le mat selon l'invention peut être imprégné dans les procédés dits moule ouvert (« open mould » en anglais) comme les procédés dits de contact (« hand lay up » en anglais), dans le but de fabriquer des matériaux composite, c'est-à-dire des matériaux comprenant une matrice de résine entourant des fibres. Le mat selon l'invention est plus particulièrement destiné à être imprégné par une résine thermodurcissable, notamment un polyester. Le mat selon l'invention mène à un matériau composite remarquable sur les plans suivants :
- forte translucidité
- forte résistance à la flexion, à la traction et aux chocs (notamment choc charpy non entaillé).

### Exemple 1:

On utilise des fils de verre 12µ 30tex P243 commercialisé par Vetrotex, lesdits fils étant revêtu par un ensimage comprenant un organosilane et un agent collant du type acétate de polyvinyle plastifié par un dibutylphtalate, lesdits fils étant coupés à 5 cm et ayant été séchés de sorte qu'ils contiennent moins de 0,2% d'eau. Ces fils sont mis en oeuvre dans le procédé de la figure 1. La concentration dans le pulpeur était de 5 grammes par litre. La concentration des fils de verre à l'arrivée sur la toile de formation était de 0,075% en poids. La toile de formation défilait avec une vitesse de 80 m/min, le débit de mélange fils/eau de procédé se déversant sur la toile étant de 80 m³/heure. L'eau de procédé contenait 0,1% en poids d'hydroxyéthyle cellulose et 0,025 % en poids de dispersant cationique. Après drainage et aspiration de l'eau excédentaire, la nappe humide envoyée à l'unité d'application du liant contient environ 35% en poids d'eau. Le liant est une émulsion de PVAc plastifié par 40% de polyesterpolyadipate de tétraéthylène glycol (PATEG) déposé de sorte que la somme du PVAc et du plastifiant représente 4% du poids du mat final. La nappe est ensuite séchée par étuve à air chaud à 180°C pendant 20 secondes. Le mat obtenu est très homogène puisque sa masse surfacique varie d'au plus 5 % à sa surface (+ ou - 2,5 % par rapport à la masse surfacique moyenne) par mesure de masse surfacique sur des échantillons découpés dans le mat de 30 cm par 30 cm. Au sein du mat final, au moins 80 % en poids des filaments font partie de fils comprenant au moins 25 filaments.

### Exemple 2 :

On procède comme pour l'exemple 1 sauf que l'on utilise comme liant une suspension de poudre dans l'eau. Cette suspension s'obtient par mélange dans l'eau de nonylphenol oxyéthyléné et d'une poudre de polymère polyester condensat de bisphénol propoxylé sur acide fumarique dont la granulométrie est de 25 à 500 µm. Le taux de poudre liante retenue sur le mat final est également de 4 % en poids. Le mat obtenu est très homogène puisque sa masse surfacique varie d'au plus 5 % à sa surface (+ ou - 2,5 % par rapport à la masse surfacique moyenne) par mesure de masse surfacique sur des échantillons découpés dans le mat de 30 cm par 30 cm. Au sein du mat final, au moins 80 % en poids des filaments font partie de fils comprenant au moins 25 filaments.

## Revendications

1. Procédé de préparation d'un mat à fils coupés comprenant
- une étape de mise en dispersion dans une eau de procédé de fils coupés et séchés après ensimage par un liquide d 'ensimage comprenant un organosilane et un agent collant, puis,
- une étape de formation d'une nappe par passage de la dispersion sur une toile de formation à travers laquelle l'eau de procédé est drainée, les fils étant retenus sur ladite toile, puis,
- une étape d'application d'un liant, puis,
- une étape de traitement thermique.

2. Procédé selon la revendication précédente, **caractérisé en ce que** les fils coupés séchés comprennent moins de 0,2% en poids d'eau.

3. Procédé selon la revendication précédente, **caractérisé en ce que** les fils coupés séchés comprennent moins de 0,1% en poids d'eau.

4. Procédé selon l'une des revendications précédentes **caractérisé en ce que** l'agent collant a une masse moléculaire comprise entre 10000 et 100000 et a après séchage à 105°C pendant deux heures une solubilité dans l'acétone à 20°C allant de 50 à 95%.

5. Procédé selon l'une des revendications précédentes **caractérisé en ce que** les fils ont une longueur allant de 20 mm à 110 mm.

6. Procédé selon l'une des revendications précédentes **caractérisé en ce qu'**au passage sur la toile de formation, les fils sont dispersés dans l'eau de procédé à raison de 0,06% à 1% en poids de la somme du poids des fils et de l'eau de procédé.

7. Procédé selon la revendication précédente, **caractérisé en ce qu'**au passage sur la toile de formation, les fils sont dispersés dans l'eau de procédé à raison de 0,1% à 1% en poids de la somme du poids des fils et de l'eau de procédé.

8. Procédé selon l'une des revendications précédentes **caractérisé en ce que** l'eau de procédé comprend un épaississant en quantité telle que l'eau de procédé présente à 20°C une viscosité comprise entre 1 et 20 mPa.s.

9. Procédé selon la revendication précédente, **caractérisé en ce que** l'eau de procédé comprend un épaississant en quantité telle que l'eau de procédé présente à 20°C une viscosité comprise entre 5 et 12 mPa.s.

10. Procédé selon l'une des revendications précédentes **caractérisé en ce que** le liant est appliqué en quantité telle que le mat comprenne entre 2 et 20% en poids de liant.

11. Procédé selon l'une des revendications précédentes **caractérisé en ce que** le liant est appliqué en quantité telle que le mat comprenne entre 3 et 6% en poids de liant

12. Procédé selon l'une des revendications précédentes **caractérisé en ce que** le traitement thermique est réalisé par chauffage entre 140 et 250°C.

13. Procédé selon l'une des revendications précédentes **caractérisé en ce que** le mat présente une masse surfacique comprise entre 50 et 1100 g/m².

14. Procédé selon la revendication précédente, **caractérisé en ce que** le mat présente une masse surfacique comprise entre 70 et 150 g/m².

15. Procédé selon l'une des revendications précédentes **caractérisé en ce que** les fils comprennent du verre.

16. Procédé selon la revendication précédente **caractérisé en ce qu'**au moment de leur mise en dispersion dans l'eau de procédé, les fils ensimés coupés et séchés contiennent 99% en poids de verre.

17. Procédé selon l'une des revendications précédentes **caractérisé en ce que** les fils comprennent 10 à 300 filaments.

18. Procédé selon l'une des revendications précédentes, **caractérisé en ce que** la dispersion fils coupés / eau de procédé est en permanence à une température allant de 10°C à 50°C.

19. Mat de fils de verre coupés dont la masse surfacique varie de moins de 20% sur sa surface et dont au moins 80% en poids des filaments sont sous la forme de fil comprenant au moins 10 filaments.

20. Mat selon la revendication précédente, **caractérisé en ce que** la masse surfacique varie de moins de 10% sur sa surface.

21. Mat selon la revendication précédente, **caractérisé en ce que** la masse surfacique varie de moins de 5% sur sa surface.

22. Mat selon l'une des revendications de mat précédentes, **caractérisé en ce que** au moins 90% en poids des filaments sont sous la forme de fil comprenant au moins 10 filaments.

23. Mat selon l'une des revendications de mat précédentes, **caractérisé en ce que** au moins 90% en poids des filaments sont sous la forme de fil comprenant au moins 25 filaments.

24. Mat selon l'une des revendications de mat précédentes, **caractérisé en ce qu'**il présente une masse surfacique comprise entre 50 et 1100 g/m².

25. Mat selon la revendication précédente, **caractérisé en ce qu'**il présente une masse surfacique comprise entre 70 et 150 g/m².

## Patentansprüche

1. Verfahren zur Herstellung einer Matte aus Kurzfäden, das die Stufen
- Dispergieren von Fäden, die nach Beschichtung mit einer Schlichte, die ein Organosilan und einen Filmbildner umfasst, getrocknet und zugeschnitten worden sind, in Rücklaufwasser,
- Bilden einer Bahn mittels Durchlauf der Dispersion über eine Siebpartie, durch welche das Rücklaufwasser abläuft, wobei die Fäden auf dieser Siebpartie zurückgehalten werden,
- Aufbringen eines Bindemittels und
- Wärmebehandeln
umfasst.

2. Verfahren nach dem vorhergehenden Anspruch, **dadurch gekennzeichnet, dass** die getrockneten Kurzfäden weniger als 0,2 Gew.-% Wasser umfassen.

3. Verfahren nach dem vorhergehenden Anspruch, **dadurch gekennzeichnet, dass** die getrockneten Kurzfäden weniger als 0,1 Gew.-% Wasser umfassen.

4. Verfahren nach einem der vorhergehenden Ansprüche, **dadurch gekennzeichnet, dass** der Filmbildner eine Molmasse von 10 000 bis 100 000 und nach zweistündiger Trocknung bei 105 °C eine Löslichkeit in Aceton bei 20 °C von 50 bis 95 % besitzt.

5. Verfahren nach einem der vorhergehenden Ansprüche, **dadurch gekennzeichnet, dass** die Länge der Fäden 20 bis 110 mm beträgt.

6. Verfahren nach einem der vorhergehenden Ansprüche, **dadurch gekennzeichnet, dass** die Fäden während des Durchlaufs über die Siebpartie im Rücklaufwasser mit 0,06 bis 1 Gew.-% der gewichtsmäßigen Summe aus Fäden und Rücklaufwasser dispergiert sind.

7. Verfahren nach dem vorhergehenden Anspruch, **dadurch gekennzeichnet, dass** die Fäden während des Durchlaufs über die Siebpartie im Rücklaufwasser mit 0,1 bis 1 Gew.-% der gewichtsmäßigen Summe aus Fäden und Rücklaufwasser dispergiert sind.

8. Verfahren nach einem der vorhergehenden Ansprüche, **dadurch gekennzeichnet, dass** das Rücklaufwasser ein Verdickungsmittel mit einer derartigen Menge enthält, dass es bei 20 °C eine Viskosität von 1 bis 20 mPa·s besitzt.

9. Verfahren nach dem vorhergehenden Anspruch, **dadurch gekennzeichnet, dass** das Rücklaufwasser ein Verdickungsmittel mit einer derartigen Menge enthält, dass es bei 20 °C eine Viskosität von 5 bis 12 mPa·s besitzt.

10. Verfahren nach einem der vorhergehenden Ansprüche, **dadurch gekennzeichnet, dass** das Bindemittel mit einer derartigen Menge aufgebracht wird, dass die Matte zwischen 2 und 20 Gew.-% davon enthält.

11. Verfahren nach einem der vorhergehenden Ansprüche, **dadurch gekennzeichnet, dass** das Bindemittel mit einer derartigen Menge aufgebracht wird, dass die Matte zwischen 3 und 6 Gew.-% davon enthält.

12. Verfahren nach einem der vorhergehenden Ansprüche, **dadurch gekennzeichnet, dass** die Wärmebehandlung durch Erwärmung zwischen 140 und 250 °C durchgeführt wird.

13. Verfahren nach einem der vorhergehenden Ansprüche, **dadurch gekennzeichnet, dass** das Flächengewicht der Matte 50 bis 1100 g/m² beträgt.

14. Verfahren nach dem vorhergehenden Anspruch, **dadurch gekennzeichnet, dass** das Flächengewicht der Matte 70 bis 150 g/m² beträgt.

15. Verfahren nach einem der vorhergehenden Ansprüche, **dadurch gekennzeichnet, dass** die Fäden Glas umfassen.

16. Verfahren nach dem vorhergehenden Anspruch, **dadurch gekennzeichnet, dass** die Kurzfäden, die mit Schlichte überzogen und getrocknet worden sind, zum Zeitpunkt des Dispergierens im Rücklaufwasser 99 Gew.-% Glas enthalten.

17. Verfahren nach einem der vorhergehenden Ansprüche, **dadurch gekennzeichnet, dass** die Fäden 10 bis 300 Filamente umfassen.

18. Verfahren nach einem der vorhergehenden Ansprüche, **dadurch gekennzeichnet, dass** die Dispersion aus Kurzfäden/Rücklaufwasser ständig auf einer Temperatur von 10 bis 50 °C gehalten wird.

19. Matte aus Kurzglasfäden, deren Flächengewicht an der Oberfläche um weniger als 20 % variiert und wovon mindestens 80 Gew.-% der Filamente in Form eines Fadens, der mindestens 10 Filamente umfasst, vorliegen.

20. Matte nach dem vorhergehenden Anspruch, **dadurch gekennzeichnet, dass** das Flächengewicht an der Oberfläche um weniger als 10 % variiert.

21. Matte nach dem vorhergehenden Anspruch, **dadurch gekennzeichnet, dass** das Flächengewicht an der Oberfläche um weniger als 5 % variiert.

22. Matte nach einem der sie betreffenden Ansprüche, **dadurch gekennzeichnet, dass** wenigstens 90 Gew.-% der Filamente in Form von Fäden vorliegen, die jeweils mindestens 10 Filamente umfassen.

23. Matte nach einem der sie betreffenden Ansprüche, **dadurch gekennzeichnet, dass** wenigstens 90 Gew.-% der Filamente in Form von Fäden vorliegen, die jeweils mindestens 25 Filamente umfassen.

24. Matte nach einem der sie betreffenden Ansprüche, **dadurch gekennzeichnet, dass** ihr Flächengewicht 50 bis 1100 g/m² beträgt.

25. Matte nach dem vorhergehenden Anspruch, **dadurch gekennzeichnet, dass** ihr Flächengewicht 70 bis 150 g/m² beträgt.

## Claims

1. A process for preparing a chopped strand mat, comprising:
- a step of dispersing, in a white water, chopped strands that are dried after sizing with a sizing liquid comprising an organosilane and a film former; then
- a step of forming a web by passing the dispersion over a forming wire through which the white water is drained, the strands being retained on said wire; then
- a step of applying a binder; and then
- a heat treatment step.

2. The process as claimed in the preceding claim, **characterized in that** the dried chopped strands contain less than 0.2% water by weight.

3. The process as claimed in the preceding claim, **characterized in that** the dried chopped strands contain less than 0.1% water by weight.

4. The process as claimed in one of the preceding claims, **characterized in that** the film former has a molecular mass of between 10000 and 100000 and, after drying at 105°C for 2 hours, has a solubility in acetone at 20°C ranging from 50 to 95%.

5. The process as claimed in one of the preceding claims, **characterized in that** the strands have a length ranging from 20 mm to 110 mm.

6. The process as claimed in one of the preceding claims, **characterized in that**, on passing onto the forming wire, the strands are dispersed in white water in an amount from 0.06 to 1% by weight of the sum of the weights of the strands and of the white water.

7. The process as claimed in the preceding claim, **characterized in that**, on passing onto the forming wire, the strands are dispersed in white water in an amount from 0.1 to 1% by weight of the sum of the weights of the strands and of the white water.

8. The process as claimed in one of the preceding claims, **characterized in that** the white water includes a thickener in an amount such that the white water has a viscosity at 20°C of between 1 and 20 mPa.s.

9. The process as claimed in the preceding claim, **characterized in that** the white water includes a thickener in an amount such that the white water has a viscosity at 20°C of between 5 and 12 mPa.s.

10. The process as claimed in one of the preceding claims, **characterized in that** the binder is applied in an amount such that the mat contains between 2 and 20% binder by weight.

11. The process as claimed in one of the preceding claims, **characterized in that** the binder is applied in an amount such that the mat contains between 3 and 6% binder by weight.

12. The process as claimed in one of the preceding claims, **characterized in that** the heat treatment is carried out by heating between 140 and 250°C.

13. The process as claimed in one of the preceding claims, **characterized in that** the mat has a mass per unit area of between 50 and 1100 g/m².

14. The process as claimed in the preceding claim, **characterized in that** the mat has a mass per unit area of between 70 and 150 g/m².

15. The process as claimed in one of the preceding claims, **characterized in that** the strands comprise glass.

16. The process as claimed in the preceding claim, **characterized in that**, at the moment of their dispersion in the white water, the sized, chopped and dried strands contain 99% glass by weight.

17. The process as claimed in one of the preceding claims, **characterized in that** the strands comprise 10 to 300 filaments.

18. The process as claimed in one of the preceding claims, **characterized in that** the chopped strand/white water dispersion is permanently at a temperature ranging from 10°C to 50°C.

19. A chopped glass strand mat, the mass per unit area of which varies by less than 20% over its surface and at least 80% by weight of the filaments of which are in the form of strand comprising at least 10 filaments.

20. The mat as claimed in the preceding claim, **characterized in that** the mass per unit area varies by less than 10% over its surface.

21. The mat as claimed in the preceding claim, **characterized in that** the mass per unit area varies by less than 5% over its surface.

22. The mat as claimed in one of the preceding mat claims, **characterized in that** at least 90% by weight of the filaments are in the form of strand comprising at least 10 filaments.

23. The mat as claimed in one of the preceding mat claims, **characterized in that** at least 90% by weight of the filaments are in the form of strand comprising at least 25 filaments.

24. The mat as claimed in one of the preceding mat claims, **characterized in that** it has a mass per unit area of between 50 and 1100 g/m².

25. The mat as claimed in the preceding claim, **characterized in that** it has a mass per unit area of between 70 and 150 g/m².
